# EUROPÄISCHE PATENTANMELDUNG

(11) **EP 2 284 130 A1**
(43) Veröffentlichungstag der Anmeldung: **16.02.2011**
(21) Anmeldenummer: 09008875.8
(22) Anmeldetag: 07.07.2009
(51) Int. Cl.: C03B 5/12, C03B 5/235, F23D 14/32, F27B 1/08, F27B 1/16

(54) **Verfahren zur Herstellung von Mineralwolle**

(71) Anmelder: Linde Aktiengesellschaft, 80331 München (DE); Grenzebach BSH GmbH, 36251 Bad Hersfeld (DE); Odenwald Faserplattenwerk GmbH, 63916 Amorbach (DE)
(72) Erfinder: Niehoff, Thomas, 85229 Markt Indersdorf (DE); Plaschke, Herbert, 46145 Oberhausen (DE); Rogge, Dirk, 63916 Amorbach (DE); Rudolph, Bernd, 36251 Bad Hersfeld (DE)
(74) Vertreter: Gellner, Bernd

(57) **Zusammenfassung**

Die Erfindung betrifft ein Verfahren zur Herstellung von Mineralwolle, wobei ein mineralisches Ausgangsmaterial in einem Kupolofen geschmolzen wird, wobei der Kupolofen einen Schacht (11) zur Aufnahme des Ausgangsmaterials aufweist und der Schacht (11) in seinem unteren Teil mit einem Rost (7) versehen ist und wobei sich unterhalb des Rostes (7) eine Brennkammer (2) befindet, wobei die Brennkammer (2) mit einem oder mehreren Brennern (6) beheizt wird, wobei der oder die Brenner (6) mit einem flüssigen oder gasförmigen Brennstoff und einem sauerstoffhaltigen Gas betrieben werden. Erfindungsgemäß werden die Brenner (6) so betrieben, dass die Menge und der Sauerstoffgehalt des sauerstoffhaltigen Gases in Abhängigkeit von mindestens einem den Schmelzprozess charakterisierenden Parameter geregelt werden.

## Beschreibung

Die Erfindung betrifft ein Verfahren zur Herstellung von Mineralwolle, wobei ein mineralisches Ausgangsmaterial in einem Kupolofen geschmolzen wird, wobei der Kupolofen einen Schacht zur Aufnahme des Ausgangsmaterials aufweist und der Schacht in seinem unteren Teil mit einem Rost versehen ist und wobei sich unterhalb des Rostes eine Brennkammer befindet, die mit einem Auslass zur Entnahme geschmolzenen Ausgangsmaterials versehen ist, wobei die Brennkammer mit einem oder mehreren Brennern beheizt wird, wobei der oder die Brenner mit einem flüssigen oder gasförmigen Brennstoff versorgt werden und der Brennstoff mit einem sauerstoffhaltigen Gas umgesetzt wird.

Mineralwolle wird aus einem silikatischen Ausgangsmaterial hergestellt, welches zunächst eingeschmolzen und dann zerfasert wird. Als Ausgangsmaterial werden natürliche Gesteine, wie beispielsweise Basalt, Diabas, Kalkstein oder Dolomit, künstliche Gesteine, wie zum Beispiel Formsteine nach festgelegter Rezeptur, Gläser, metallische Schlacken oder andere mineralische Materialien eingesetzt.

Im Folgenden werden die Begriffe Mineralwolle oder Mineralfasern synonym verwendet und sollen alle Arten von aus dem oben genannten Ausgangsmaterial hergestellten Fasern umfassen.

Das Ausgangsmaterial wird in einem Schmelzofen eingeschmolzen. In der Regel wird hierzu ein Schachtofen, insbesondere ein Kupolofen, eingesetzt. Die entstehende mineralische Schmelze wird anschließend einer Zerfaserungseinrichtung zugeführt, welche die Schmelze in feine Mineralfasern zerfasert. Die Mineralfasern werden meist noch mit Bindemittel und Additiven versetzt, gegebenenfalls weiter aufbereitet, um schließlich zu Akustikplatten, Dämmplatten oder -bahnen oder Formkörpern verarbeitet zu werden. Die so aus Mineralwolle hergestellten Dämmstoffe finden in bekannter Weise zur Schall- oder Wärmeisolierung oder als Brandschutzmaterialien Verwendung.

Das Einschmelzen des mineralischen Ausgangsmaterials erfolgt bisher meist in mit Koks befeuerten Kupolöfen. Der Kupolofen wird von oben mit Koks als Brennstoff, dem mineralischen Ausgangsmaterial und Zuschlagstoffen befüllt. Im unteren Teil des Ofens wird Verbrennungsluft eingeblasen. Die entstehende Mineralschmelze sammelt sich am Boden des Kupolofens und kann über einen Siphon abgezogen werden.

Solche herkömmliche, mit Koks befeuerte Kupolofenanlagen verursachen allerdings hohe Emissionen von Kohlenmonoxid, Kohlendioxid und Staub. Insbesondere zum Schmelzen von Metallen sind daher bereits kokslos betriebene Kupolöfen bekannt. Als Brennstoff werden in "kokslosen" Kupolöfen anstelle von Koks flüssige oder gasförmige Energieträger, wie zum Beispiel Heizöl oder Erdgas, eingesetzt.

Die aus der Eisenherstellung bekannten, kokslosen Kupolöfen können nicht ohne weiteres zur Mineralwolleherstellung verwendet werden, da völlig unterschiedliche energetische, thermische und chemische Verhältnisse im Ofen vorliegen.

In der DE 38 75 616 T2 wird ein Kupolofen beschrieben, der speziell für die Produktion von Mineralwolle ausgelegt ist. Das zu schmelzende Ausgangsmaterial wird mit keramischen Füllkörpern auf einem wassergekühlten Rost angeordnet. Unterhalb des Rostes befindet sich die Brennkammer, die mittels eines mit gasförmigen oder flüssigen Brennstoffen befeuerten Hauptbrenners beheizt wird. Zusätzlich sind oberhalb des Rostes mit Erdgas betriebene Hilfsbrenner vorgesehen, um ein regelmäßiges Abschmelzen zu gewährleisten.

Aufgabe vorliegender Erfindung ist es, ein verbessertes Verfahren zur Herstellung von Mineralwolle aufzuzeigen. Insbesondere soll die Betriebsweise eines koksfrei betriebenen Kupolofens hinsichtlich der speziellen Anforderungen beim Schmelzen mineralischer Ausgangsstoffe für die Mineralwolleproduktion optimiert werden.

Diese Aufgabe wird durch ein Verfahren zur Herstellung von Mineralwolle gelöst, wobei ein mineralisches Ausgangsmaterial in einem Kupolofen geschmolzen wird, wobei der Kupolofen einen Schacht zur Aufnahme des Ausgangsmaterials aufweist und der Schacht in seinem unteren Teil mit einem Rost versehen ist und wobei sich unterhalb des Rostes eine Brennkammer befindet, die mit einem Auslass zur Entnahme geschmolzenen Ausgangsmaterials versehen ist, wobei die Brennkammer mit einem oder mehreren Brennern beheizt wird, wobei der oder die Brenner mit einem flüssigen oder gasförmigen Brennstoff versorgt werden und der Brennstoff mit einem sauerstoffhaltigen Gas umgesetzt wird, und welches dadurch gekennzeichnet ist, dass die Menge und der Sauerstoffgehalt des sauerstoffhaltigen Gases in Abhängigkeit von mindestens einem den Schmelzprozess charakterisierenden Parameter, insbesondere der Abgastemperatur, Abgaszusammensetzung, Temperatur des zu schmelzenden und/oder des geschmolzenen Ausgangsmaterials oder der Flammenintensität, geregelt werden.

Erfindungsgemäß wird der Schmelzprozess im Kupolofen über die Sauerstoffkonzentration des sauerstoffhaltigen Gases und über dessen Menge geregelt. Durch Erhöhung der Sauerstoffkonzentration kann die Flammenintensität und deren Temperatur deutlich erhöht werden. Die Wärmeübertragung auf das zu schmelzende Ausgangsmaterial wird intensiviert, die Schmelzleistung erhöht. Durch den Wegfall oder die Reduktion des bei der Verbrennung nicht benötigten Stickstoffs werden sowohl die Abgasmenge als auch der Brennstoffverbrauch reduziert. Aufgrund der höheren Flammentemperatur kommt der Wärmeübertragung durch Strahlung eine höhere Bedeutung zu.

Wenn umgekehrt die Sauerstoffkonzentration in dem sauerstoffhaltigen Gas gesenkt wird, die Gesamtsauerstoffmenge aber gleich bleibt, so bedeutet das, dass die Menge an an der Verbrennung nicht aktiv teilnehmendem Gas, in der Regel Stickstoff, zunimmt. In diesem Fall werden entsprechend größere Gasmengen durch den Kupolofen bewegt. Die Wärmeübertragung auf das zu schmelzende Ausgangsmaterial wird daher wesentlich über Konvektion stattfinden: Das durch die Brenner aufgewärmte Gas, insbesondere Stickstoff, strömt durch den Kupolofen und gibt dabei Wärme an das Ausgangsmaterial ab.

Schließlich kann durch Erhöhung der Gesamtsauerstoffmenge und entsprechende Anpassung der Brennstoffmenge die Leistung der Brenner und damit die insgesamt in den Kupolofen pro Zeiteinheit eingebrachte Wärme erhöht werden.

Erfindungsgemäß können damit nicht nur die dem Ofen zugeführte Wärmeleistung, sondern auch die vorherrschende Art des Wärmeübergangs - nämlich Konvektion oder Wärmestrahlung - beeinflusst werden. Dabei kann durch entsprechende Regelung bei gleichbleibendem Wärmeübertragungsmechanismus die eingebrachte Wärmeleistung geändert werden oder bei gleichbleibender Wärmezufuhr die Art der Hauptwärmeübertragung beeinflusst werden. Beide Parameter, zugeführte Wärmeleistung und Wärmeübertragungsmechanismus, sind unabhängig voneinander einstellbar. Der Schmelzprozess kann damit wesentlich genauer gesteuert werden. Wärmeübertragungsmechanismus und zugeführte Gesamtwärmeleistung werden erfindungsgemäß in Abhängigkeit von einem oder mehreren den Schmelzprozess charakterisierenden Parametern, insbesondere der Abgastemperatur, Abgaszusammensetzung, Temperatur des zu schmelzenden und/oder des geschmolzenen Ausgangsmaterials oder der Flammenintensität, eingestellt.

Von Vorteil wird in der Aufheizphase, in der noch kein geschmolzenes Ausgangsmaterial über den Auslass entnommen werden kann, dem Kupolofen ein sauerstoffhaltiges Gas zugeführt, welches einen geringeren Sauerstoffanteil aufweist als das sauerstoffhaltige Gas, welches dem Kupolofen in der Schmelzphase zugeführt wird, in der geschmolzenes Ausgangsmaterial über den Auslass entnommen werden kann.

Beim Hochfahren oder Anwärmen des Kupolofens, nachdem der Ofen mit Ausgangsmaterial chargiert wurde, ist eine möglichst gleichmäßige Erwärmung des gesamten Ausgangsmaterials gewünscht. Von Vorteil wird daher der Sauerstoffanteil in dem sauerstoffhaltigen Gas reduziert, wodurch umgekehrt der Anteil der Nicht-Sauerstoff-Gase steigt. Zum Beispiel wird in dieser Aufheizphase dem Kupolofen Luft zugeführt, die auf einen Sauerstoffanteil von 25% angereichert wurde, d.h. etwa 75 % des zugeführten sauerstoffhaltigen Gases ist Stickstoff, welcher an der Verbrennung des Brennstoffs nicht teilnimmt. Der Stickstoff bzw. allgemein die Nicht-Sauerstoff-Anteile in dem sauerstoffhaltigen Gas müssen durch den Kupolofen über die Abgasleitung abgeführt werden. Dabei durchströmen diese Gase das Ausgangsmaterial und heizen dieses über Konvektion auf.

Diese Aufheizphase mit Konvektion als vorherrschendem
Wärmeübertragungsmechanismus wird vorzugsweise so lange durchgeführt, bis sich im Kupolofen im Wesentlichen die Betriebstemperatur eingestellt hat. Diese ist **dadurch gekennzeichnet, dass** aus dem Auslass oder Abstich des Kupolofens flüssiges Material herausfließt.

Besonders günstig ist es, in dieser Phase den oder die Brenner so zu betreiben, dass eine flammenlose Verbrennung einsetzt.

Sobald im Kupolofen Betriebstemperatur herrscht und das geschmolzene Ausgangsmaterial flüssig abgezogen werden kann, wird von Vorteil auf eine Verfahrensweise umgeschaltet, in der die Wärmestrahlung den Hauptanteil oder zumindest einen größeren Anteil an der Wärmeübertragung auf das zu schmelzende Ausgangsmaterial hat. Hierzu wird der Sauerstoffanteil in dem dem Kupolofen zugeführten sauerstoffhaltigen Gas erhöht, wodurch die Flammenintensität deutlich verstärkt und die Wärmestrahlung intensiviert wird. Die Flammenintensität kann beispielsweise mittels einer UV-Sonde überwacht werden.

Das dem Kupolofen zur Verbrennung des Brennstoffs zugeführte sauerstoffhaltige Gas kann dem Brenner selbst zugeführt werden und/oder an einer anderen Stelle in den Kupolofen geleitet werden. Vorzugsweise wird in der Aufheizphase dem oder den Brennern ein sauerstoffhaltiges Gas zugeführt, welches einen geringeren Sauerstoffanteil aufweist als das sauerstoffhaltige Gas, welches dem oder den Brennern in der Schmelzphase zugeführt wird.

Es hat sich als günstig erwiesen, den oder die Brenner in der Aufheizphase mit einem sauerstoffhaltigen Gas zu betreiben, welches einen Sauerstoffanteil von weniger als 30 %, vorzugsweise zwischen 21% und 30%, aufweist, und dass der oder die Brenner in der Schmelzphase mit einem sauerstoffhaltigen Gas betrieben werden, welches einen Sauerstoffanteil von mehr als 30 % aufweist. Das sauerstoffhaltige Gas wird entweder direkt dem oder den Brenner(n) zugeführt oder anderweitig in den Kupolofen eingeleitet und mit dem Brennstoff zur Reaktion gebracht. Der Brennstoff wird also in der Aufheizphase mit einem sauerstoffhaltigen Gas mit einem Sauerstoffgehalt von weniger als 30 % verbrannt und in der Schmelzphase mit einem sauerstoffhaltigen Gas verbrannt, welches einen Sauerstoffanteil von mehr als 30 % aufweist. Im Rahmen dieser Beschreibung sind alle Gasanteile jeweils in Volumenprozent angegeben.

Es hat sich als vorteilhaft herausgestellt, die Brenner so zu betreiben, dass die Länge der bei der Verbrennung des Brennstoffes mit dem sauerstoffhaltigen Gas entstehenden Flammen zwischen 60 % und 100 %, bevorzugt zwischen 65 % und 95 %, des Durchmessers der Brennkammer beträgt.

Verlaufen die Flammen nicht entlang eines Durchmessers der Brennkammer, so hat es sich als günstig erwiesen, die Länge der Flamme so einzustellen, dass diese zwischen 65% und 95% der freien Wegstrecke der Flamme in der Brennkammer beträgt, das heißt 65% bis 95% des Abstandes zwischen der Brenneraustrittsöffnung und der in Flammenrichtung gegenüberliegenden Wand der Brennkammer.

Es hat sich gezeigt, dass die Länge der Flammen in der Brennkammer einen entscheidenden Einfluss auf den Schmelzvorgang und die Wärmeübertragung auf das Schmelzgut hat. Sowohl eine kleine als auch eine zu große Flammenlänge führen zu einer ungleichmäßigen Erhitzung der Brennkammer und des zu schmelzenden Ausgangsmaterials und in der Folge zu einer häufig unzureichenden und teilweise nicht reproduzierbaren Qualität des Schmelzproduktes.

So wird beispielsweise bei einer zu kurz eingestellten Flammenlänge die Ofenausmauerung sehr großen thermischen Belastungen ausgesetzt und kann beschädigt werden. Analoges gilt, wenn die Flammen zu lang sind und direkt auf die gegenüberliegende Wand der Brennkammer treffen. Erfindungsgemäß werden die Flammenlängen daher so eingestellt, dass eine gleichmäßige thermische Belastung der gesamten Brennkammer erzielt wird.

Das erfindungsgemäße Verfahren lässt sich mit besonderem Vorteil in Kupolöfen einsetzen, bei denen der Anteil von Koks am Brennstoff weniger als 20 Gewichts-% beträgt. Ganz besonders bevorzugt wird die Erfindung in kokslos betriebenen Kupolöfen eingesetzt, d.h. in Kupolöfen, in denen Koks nicht als Brennstoff eingesetzt wird. Die Wärmezufuhr in den Kupolofen erfolgt bevorzugt ausschließlich mittels der Brenner, d.h. durch Verbrennung des Brennstoffes mit dem sauerstoffhaltigen Gas. Bei der erfindungsgemäßen Fahrweise des Kupolofens herrscht in dem Ofen eine oxidierende Atmosphäre im Gegensatz zu dem reduktiven Verhalten eines mit Koks befeuerten Kupolofens. Die Entstehung von Wasserstoff und umweltschädlichen Abgasen wird dadurch vermieden und das Gichtgas kann ohne aufwändige Nachbehandlung an die Atmosphäre abgegeben werden.

Die Zusammensetzung des Ausgangsmaterials wird so gewählt, dass die hergestellte Mineralwolle einen vorgegebenen Farbeindruck aufweist, das heißt dass zum Beispiel schwarze, gelbe oder weiße Mineralwolle erzeugt wird. Hierzu werden beispielsweise der Eisengehalt bzw. der Eisenoxidgehalt des Ausgangsmaterials entsprechend gewählt oder es werden gezielt chemischen Beimengungen und Additive hinzugegeben.

Von Vorteil wird den Brennern mit Sauerstoff angereicherte Luft als sauerstoffhaltiges Gas zugeführt. Es hat sich als günstig erwiesen, den Sauerstoffgehalt in dem sauerstoffhaltigen Gas auf einen Wert zwischen 21 % und 50% einzustellen. Besonders bevorzugt ist eine Anreicherung der den Brennern zugeführten Verbrennungsluft auf einen Sauerstoffgehalt von 25% bis 40%. Es ist aber auch möglich, die Brenner als reine Sauerstoffbrenner zu betreiben, das heißt, den Brennern als Oxidationsmittel technisch reinen Sauerstoff zuzuführen.

Erfindungsgemäß wird ein flüssiger oder, bevorzugt, ein gasförmiger Brennstoff verwendet, wobei mit besonderem Vorteil Erdgas eingesetzt wird. Aber auch andere Brenngase, wie zum Beispiel Propan, Butan usw., oder flüssige Brennstoffe, beispielsweise Öl oder Heizöl, sind grundsätzlich geeignet.

Neben der Flammenlänge hat auch die Anordnung und Ausrichtung der von den Brennern erzeugten Flammen einen Einfluss auf den Schmelzprozess.

Vorzugsweise wird die Brennkammer von 2 bis 8 Brennern, besonders bevorzugt von 3 bis 5 Brennern beheizt. Die Brenner sind von der Seite in die Brennkammer gerichtet. Hierzu sind die Seitenwände der Brennkammer mit Vorrichtungen zur Aufnahme der Brenner beziehungsweise mit Öffnungen zur Durchführung der Brenner versehen.

Die Austrittsöffnung eines Brenners bzw. die Brennerspitze befindet sich bevorzugt in der Ebene der entsprechenden Seitenwand, die den Brenner aufnimmt bzw. die der Brenner durchstößt.

Zum Schutz der Brennerspitze kann es auch von Vorteil sein, den Brenner in der Seitenwand zurückzusetzen. Die Austrittsöffnung des Brenners befindet sich in diesem Fall nicht in einer Ebene mit der Innenseite der Seitenwand, sondern nach außen versetzt.

Zur Sicherstellung einer möglichst gleichmäßigen Erhitzung werden die Brenner vorzugsweise gleichmäßig über den Umfang der Brennkammer verteilt angeordnet. So werden beispielsweise beim Einsatz von drei Brennern diese an den Spitzen eines gedachten gleichseitigen Dreiecks angeordnet. Ausgehend von der Brennkammermitte beträgt der Winkelabstand der Brenneröffnungen in diesem Fall jeweils 120°. Vier Brenner werden entsprechend an den Ecken eines imaginären Quadrats platziert. Bei einer quadratischen Brennkammer wird beispielsweise bevorzugt eine Ausführung mit vier Brennern eingesetzt.

Die Brennkammer besitzt von Vorteil einen kreisförmigen Querschnitt, so dass keine Raumrichtung bevorzugt wird. Das erfindungsgemäße Verfahren kann aber auch, wie oben erwähnt, in einem Kupolofen mit einer Brennkammer mit quadratischem Querschnitt ausgeführt werden, beispielsweise wenn ein bestehender Ofen auf das erfindungsgemäße Verfahren umgestellt werden soll.

Vorzugsweise ist die Brennkammer zylindrisch ausgeführt oder von oben nach unten konisch erweitert. In letzterem Fall wächst die Querschnittsfläche der Brennkammer von Vorteil von oben nach unten stetig und gleichmäßig an. Bevorzugte Ausführungsformen der Brennkammer sind insoweit ein Kegelstumpf oder Pyramidenstumpf. Die Brennkammer kann aber auch von oben nach unten in ein oder mehreren Stufen bzw. Schritten erweitert sein.

Erfindungsgemäß werden die Flammen der Brenner zur Erhitzung des Ausgangsmaterials in die Brennkammer eingepasst, indem deren Länge entsprechend der Größe und Form der Brennkammer gewählt werden. Es hat sich gezeigt, dass auch die Ausrichtung der Flammen sowie deren gleichmäßiger Betrieb wesentlichen Einfluss auf den Schmelzprozess hat. Vorzugsweise werden daher die Mittelachsen der Brenner um einen Winkel zwischen 5° und 15°, besonders vorzugsweise zwischen 8° und 12°, gegen die Waagrechte geneigt.

Die Mittelachsen der Brenner sind hierbei bevorzugt nach unten geneigt und die aus den Brennern austretenden Flammen entsprechend schräg nach unten gerichtet, um das herabfließende Schmelzgut schnell und effektiv zu überhitzen. Die richtige Temperatur und somit Viskosität der Schmelze hat entscheidenden Einfluß auf das Schmelzergebnis.

In einer weiteren bevorzugten Ausführungsform werden die Brenner jeweils so angeordnet, dass die Projektion der Zentralachse des Brenners und die Projektion des durch die Austrittsöffnung des Brenners verlaufenden Durchmessers der Brennkammer in eine waagrechte Ebene einen Winkel zwischen 3° und 20°, vorzugsweise zwischen 5° und 15°, bilden. Die Verlängerungen der Mittelachsen der Brenner schneiden somit nicht die Mittelsenkrechte der Brennkammer. Die Flammen sind nicht genau auf die Mitte der Brennkammer gerichtet, sondern je nach eingestelltem Winkel leicht nach außen versetzt, wobei bevorzugt alle Brenner unter dem gleichen Winkel angeordnet sind, oder je nach Anzahl der Brenner auch versetzt. Je nach Ausströmgeschwindigkeit des Brennstoffs und des sauerstoffhaltigen Gases aus dem Brenner wird so in der Brennkammer eine Rotationsbewegung der heißen Brenngase hervorgerufen, die eine weitere Vergleichmäßigung der Energiezufuhr mit sich bringt.

Von Vorteil wird ein außenmischender Brenner eingesetzt, d. h. ein Brenner, bei dem das Brenngas und das sauerstoffhaltige Gas getrennt zum Brennerkopf geführt und erst außerhalb des Brenners miteinander gemischt werden. Von besonderem Vorteil ist ein Brenner mit mindestens einer Brenngaszuleitung, mindestens einer Zuleitung für ein erstes sauerstoffhaltiges Gas und mindestens einer Zuleitung für ein zweites sauerstoffhaltiges Gas. Der Brennerkopf des Brenners weist dabei getrennte Austrittsöffnungen für das Brenngas und die beiden sauerstoffhaltigen Gase auf. Vorzugsweise wird als eines der sauerstoffhaltigen Gase Luft und als anderes sauerstoffhaltiges Gas mit Sauerstoff angereicherte Luft oder reiner Sauerstoff verwendet.

In einer weiteren bevorzugten Ausführungsform sind der oder die Brenner mit einer unabhängigen Druckluftkühlung bei Systemausfall versehen. Bei einem Stromausfall fallen sowohl das Gebläse, das die Luft zum Brenner befördert, als auch die Sauerstoff-Erdgas-Regelstrecke, die die Versorgung des Brenners mit Sauerstoff und Erdgas regelt, aus. Das heißt, bei einem Stromausfall wird der Brenner normalerweise weder mit Luft oder Sauerstoff noch mit Brenngas / Erdgas versorgt. Der Kupolofen selbst ist aber noch heiß, so dass es in kürzester Zeit zu einer Schädigung der Brenner kommt, wenn diese nicht anderweitig gekühlt werden.

Hierzu wird mit Vorteil eine unabhängige Druckluftkühlung eingesetzt. In der zu dem Brenner führenden Zuleitung für das erste und/oder der Zuleitung für das zweite sauerstoffhaltige Gas wird eine Abzweigung vorgesehen, die an einen Druckluftspeicher angeschlossen ist. In der Verbindungsleitung von dem Druckluftspeicher zu der Abzweigung befindet sich ein Magnetventil, welches im stromführenden Zustand geschlossen und im stromlosen Zustand geöffnet ist. Im normalen Betrieb ist das Magnetventil daher geschlossen und der Druckluftspeicher von den Brennern abgekoppelt. Bei einem Stromausfall öffnet das Magnetventil automatisch und Druckluft kann aus dem Druckluftspeicher zu den Brennern strömen und diese kühlen. Der Ofenbetreiber gewinnt dadurch mehr Zeit, den Systemausfall zu beheben oder eine anderweitige Kühlung in Betrieb zu nehmen.

Besonders bevorzugt werden Brenner, wie sie in der DE 100 46 569 A1 beschrieben sind. Bei diesem Brennertyp sind die Austrittsöffnungen so im Brennerkopf angeordnet, dass die Gase im Wesentlichen in axialer Richtung aus dem Brenner austreten, wobei sich die Austrittsöffnungen aller Brenngaszuleitungen in Strömungsrichtung nach den Austrittsöffnungen der ersten und zweiten Zuleitungen befinden.

Vorzugsweise wird mit den Brennern in der Brennkammer eine Temperatur zwischen 1200 und 1800 °C erzeugt. Besonders bevorzugt wird die Temperatur in der Brennkammer auf einen Wert zwischen 1350 und 1650 °C eingestellt. Der genaue Temperaturbereich ist hierbei von der Art und Zusammensetzung des dem Ofen zugeführten, zu schmelzenden Ausgangsmaterials abhängig.

Die spezifische Brennerleistung beträgt von Vorteil zwischen 1000 und 1500 kW pro Tonne Schmelzgut. Weiterhin wird die Leistung der Brenner vorzugsweise zu 1100 bis 1200 kWh gewählt.

In einer Ausführungsform der Erfindung beträgt der Sauerstoffanteil in dem den Brennern bei Ofentemperaturen unterhalb von 800 °C, das heißt in der Aufheizphase, zugeführten sauerstoffhaltigen Gas zwischen 21 % und 30 %, vorzugsweise zwischen 25 % und 28 %. Das Anfahren sollte langsam erfolgen, um große Temperaturgradienten im Ofen zu vermeiden, die Beschädigungen am Kupolofen hervorrufen könnten.

Von besonderem Vorteil wird der Kupolofen daher in dieser Aufheizphase auch nicht mit allen Brennern aufgeheizt, sondern bevorzugt mit nur einem Brenner.

Nach dem ersten Aufheizen des Ofens, bei Temperaturen oberhalb von 800 °C, kann die dem Ofen über die Brenner zugeführte Leistung erhöht werden. Von Vorteil werden dann alle im Ofen installierten Brenner eingesetzt. Der Sauerstoffanteil in dem sauerstoffhaltigen Gas, welches den Brennern zugeführt wird, wird gegenüber der Aufheizphase erhöht, bevorzugt auf Werte zwischen 32 % und 37 %, insbesondere 35 %. Dieser hohe Sauerstoffanteil wird bevorzugt beibehalten, bis die Temperatur im Kupolofen einen Wert von 1350 °C erreicht hat.

Ab 1350 °C kann die dem Ofen über die Brenner zugeführte Leistung wieder reduziert werden. Es hat sich als günstig erwiesen, den Sauerstoffanteil in dem sauerstoffhaltigen Gas, welches den Brennern zugeführt wird, auf 28 % bis 30 % zu senken.

Bei der Befeuerung des Kupolofens wird also in einer Ausführungsform der Erfindung zwischen drei Phasen unterschieden:
■ Bei T < 800 °C geringe Energiezufuhr und niedriger Sauerstoffgehalt von 25% bis 28% in dem den Brennern zugeführten sauerstoffhaltigen Gas,
■ bei 800 °C < T < 1350°C werden die Brenner mit hohem Sauerstoffanteil von 32% bis 37%, beispielsweise 35%, gefahren und
■ bei Temperaturen T > 1350°C wird der Sauerstoffanteil wieder auf 28% bis 30% reduziert.

Es hat sich weiter als Vorteil erwiesen, die Brennkammer mit einer oder mehreren Lanzen zu versehen. Der oder die Brenner werden in diesem Fall bevorzugt unterstöchiometrisch betrieben und über die Lanzen wird ein sauerstoffhaltiges Gas, vorzugsweise sauerstoffangereicherte Luft oder technisch reiner Sauerstoff, in die Brennkammer geleitet. Auf diese Weise wird eine gestufte Verbrennung des Brennstoffs erreicht. Ein Teil des Brennstoffs wird zunächst unterstöchiometrisch mit dem über den Brenner zugeführten sauerstoffhaltigen Gas verbrannt. Das entstehende Gemisch aus Reaktionsprodukten und unverbranntem Brennstoff wird anschließend mit dem über die Lanzen zugeführten sauerstoffhaltigen Gas nachverbrannt.

Dies Verfahrensweise hat mehrere Vorteile: Zum einen wird eine räumlich größere Ausdehnung und damit gleichmäßigere Erwärmung des Kupolofens erzielt. Zum anderen stellen sich niedrigere Flammentemperaturen ein als bei einer Zuführung des gesamten für die Verbrennung des Brennstoffs notwendigen sauerstoffhaltigen Gases direkt zum Brenner. Die NOX-Emissionen können so wirkungsvoll gesenkt werden.

Diese Variante ist insbesondere in der Schmelzphase, d.h. wenn über den Auslass oder Abstich des Kupolofens schmelzflüssiges Material abgezogen werden kann, von Vorteil.

Bei der Verwendung von Lanzen zur Zuführung von sauerstoffhaltigem Gas in den Kupolofen wird vorzugsweise höchstens 30%, vorzugsweise zwischen 5% und 20%, der gesamtem dem Kupolofen zugeführten Menge an sauerstoffhaltigem Gas über die Lanzen zugeführt.

Die Lanzen werden von Vorteil oberhalb der Brenner in den Wänden der Brennkammer installiert. Die horizontale Ausrichtung der Lanzen kann ebenso wie bei den Brennern leicht nach unten geneigt sein, das heißt die Mittelachsen der Lanzen werden um einen Winkel zwischen 5° und 15°, besonders vorzugsweise zwischen 8° und 12°, gegen die Waagrechte nach unten geneigt. Das aus den Lanzen ausströmende sauerstoffhaltige Gas strömt entsprechend nach unten in Richtung der von den Brennern erzeugten Flammen.

Zur Vergleichmäßigung der Verbrennung werden auch die Lanzen so ausgerichtet, dass die Projektion der Zentralachse einer Lanze und die Projektion des durch die Austrittsöffnung der Lanze verlaufenden Durchmessers der Brennkammer in eine waagrechte Ebene einen Winkel zwischen 10° und 30°, vorzugsweise zwischen 16° und 24°, bilden. Die Verlängerungen der Mittelachsen der Lanzen schneiden somit nicht die Mittelsenkrechte der Brennkammer. Die aus den Lanzen austretenden Gasströme sind nicht genau auf die Mitte der Brennkammer gerichtet, sondern je nach eingestelltem Winkel leicht nach außen versetzt, wobei bevorzugt alle Lanzen unter dem gleichen Winkel angeordnet sind. Der Neigungswinkel der Lanzen ist aber vorzugsweise größer als der entsprechende Neigungswinkel der Brenner. Es hat sich beispielsweise als günstig erwiesen, den Neigungswinkel der Lanzen doppelt so groß zu wählen wie den der Brenner.

Je nach Ausströmgeschwindigkeit des sauerstoffhaltigen Gases aus den Lanzen wird so in der Brennkammer eine Rotationsbewegung der heißen Brenngase hervorgerufen, die eine weitere Vergleichmäßigung der Energiezufuhr mit sich bringt. Es hat sich gezeigt, dass hierbei eine Ausströmgeschwindigkeit des sauerstoffhaltigen Gases aus den Lanzen zwischen 100 m/s und 200 m/s gute Ergebnisse liefert.
Um die Wärmeverluste durch das Abgas zu minimieren, wird von Vorteil die Temperatur des den Kupolofen verlassenden Abgases gemessen und Menge und Sauerstoffgehalt des sauerstoffhaltigen Gases werden so eingestellt, dass sich eine Abgastemperatur zwischen 80°C und 250°C, vorzugsweise zwischen 100 °C und 140 °C einstellt.

In der Abgasleitung wird zum Beispiel ein Thermoelement eingebaut und damit die Abgastemperatur bestimmt. Aufgrund dieser Messung wird der Schmelzprozess so geregelt, dass der Wärmeübergang auf das zu schmelzende Ausgangsmaterial im Kupolofen optimiert wird. Der Wärmeübertragungsmechanismus, d.h. Variation zwischen Konvektion und Wärmestrahlung, und die Gesamtenergiezufuhr zum Kupolofen werden so geregelt, dass die Abgastemperatur in den gewünschten Zielbereich kommt.

Die Erfindung sowie weitere Einzelheiten der Erfindung werden im Folgenden anhand von in den Zeichnungen dargestellten Ausführungsbeispielen näher erläutert. Hierbei zeigen:
- Figur 1: einen Schachtofen zur Durchführung des erfindungsgemäßen Verfahrens und
- Figur 2: die erfindungsgemäße Anordnung der Brenner.

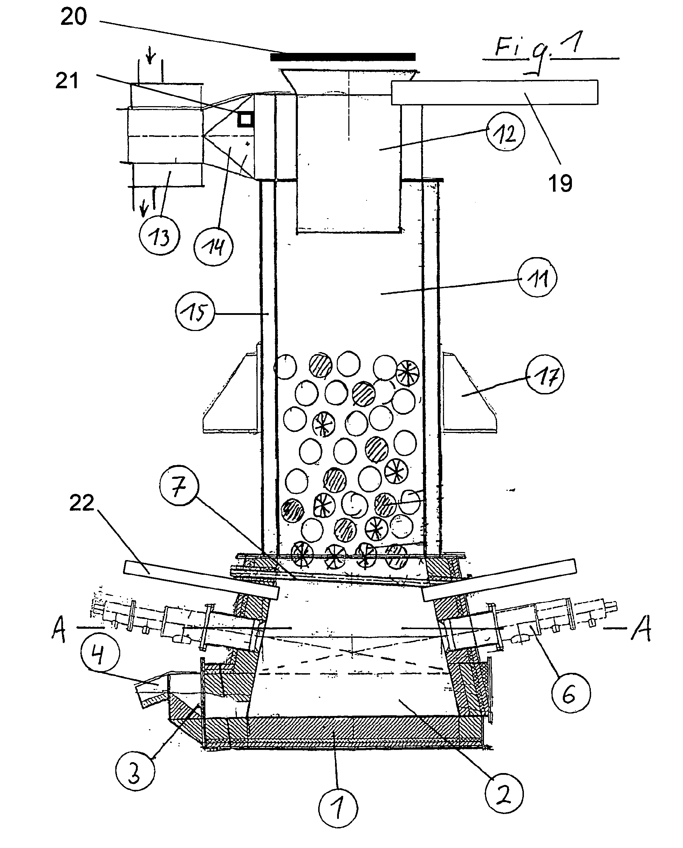

Figur 1 zeigt einen Kupolofen, der für das Einschmelzen von Ausgangsmaterial für die Mineralwolleherstellung ausgelegt ist. Der Kupolofen weist einen zylindrischen Mantel 15 auf, der einen Schacht 11 begrenzt. Unterhalb des Schachtes 11 befindet sich eine Brennkammer 2. Die Brennkammer 2 besitzt einen kreisförmigen Querschnitt und ist nach unten konisch erweitert, das heißt die Brennkammer 2 ist im Wesentlichen kegelstumpfförmig ausgebildet. Mit der Bezugsziffer 1 ist ein aufklappbarer Ofenboden gekennzeichnet.

Im Einlassbereich des Schachtes 11 ist in der Figur 1 die Einfüllöffnung 12 dargestellt, in die der Abluftkanal 14 mündet. Die über den Abluftkanal 14 entnommene Prozesswärme wird über den Wärmetauscher 13 einer weiteren Verwendung zugeführt. Die Halterungen 17 dienen der mechanischen Befestigung des Kupolofens.

Anstelle oder zusätzlich zu einer batchweisen Zuführung des Ausgangsmaterials in den Kupolofen kann auch ein Förderaggregat 19 vorgesehen sein, um das Ausgangsmaterial kontinuierlich in den Ofen einzubringen. Insbesondere in diesem Fall, aber auch bei einer batchweisen Beschickung, ist es von Vorteil, die Einfüllöffnung 12 des Schachts 11 mit einem Deckel 20 zu verschließen.

Im Verbindungsbereich zwischen dem Schacht 11 und der Brennkammer 2 ist in der Darstellung der Figur 1 ein schräg eingebauter Rost 7 zu erkennen, von dem im Betrieb die Schmelze in die Brennkammer 2 tropft. Im Bodenbereich der Brennkammer 2 befindet sich ein Siphon 3 mit einer Entnahmeöffnung 4. Die Brennkammer 2 besitzt einen um einen Winkel zwischen 0° und 5°, bevorzugt zwischen 2° und 5°, angeschrägten Boden, so dass die entstehende Schmelze in Richtung des Siphons 3 läuft.

Die Brennkammer 2 ist mit drei Gasbrennern 6 ausgerüstet. Die Gasbrenner 6 sind als außenmischende Brenner mit separaten Gaszuführungen für ein Brenngas, Luft und Sauerstoff ausgeführt. Das Brenngas, Luft und Sauerstoff werden erst außerhalb des Brennerkopfes, d. h. in der Brennkammer 2, zusammengeführt. Von Vorteil befindet sich die Austrittsöffnung für das Brenngas stromabwärts der Austrittsöffnungen für die Luft und den Sauerstoff. Durch diese Anordnung wird erreicht, dass die Luft und der Sauerstoff zunächst miteinander vermischt und verwirbelt werden, bevor sie mit dem Brenngas in Kontakt kommen. Das verwirbelte Gemisch aus Luft und Sauerstoff vermischt sich dadurch besser mit dem Brenngas und es wird eine stabilere Verbrennung erzielt.

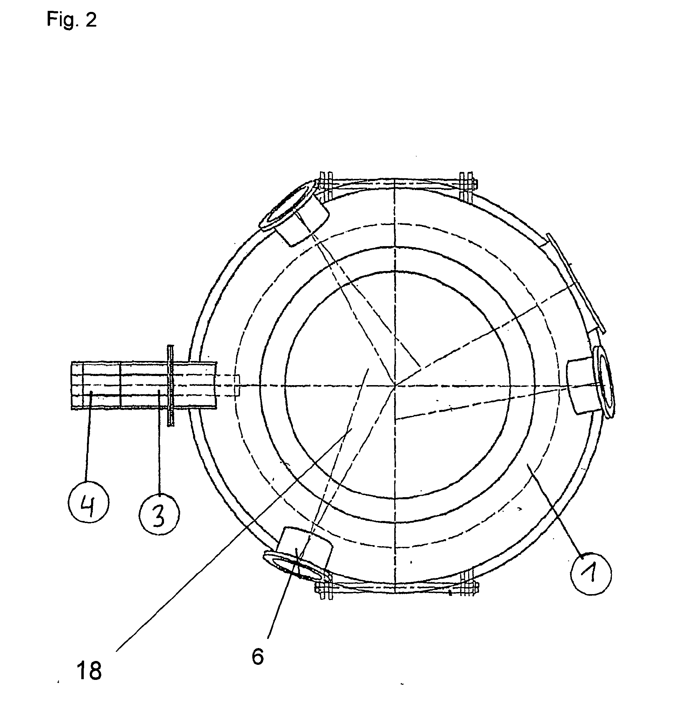

Die Gasbrenner 6 sind unter einem Winkel von 3 bis 20° gegen die Horizontale in den Seitenwänden der Brennkammer 2 angeordnet, so dass die Austrittsrichtung der Gase aus den Gasbrennern 6 schräg nach unten verläuft. Zudem sind die Längsachsen der Brenner 6 nicht direkt auf die vertikale Symmetrieachse der Brennkammer 2 gerichtet, sondern weichen um einen Winkel 18 von 4 bis 15° davon ab (Figur 2). Auf diese Weise wird in der Brennkammer 2 eine Rotationsströmung hervorgerufen, die zu einer stabileren Verbrennung und einer gleichmäßigeren Erwärmung führt.

Oberhalb der Gasbrenner 6 sind mehrere Lanzen 22 in die Brennkammer 2 eingebaut. Die Lanzen 22 sind gleichmäßig über den Umfang der Brennkammer 2 verteilt und unter einem Winkel von beispielsweise 5° nach unten geneigt angeordnet. Die Lanzen 22 sind ebenso wie die Gasbrenner 6 nicht auf die Mittelachse der Brennkammer 2 ausgerichtet. Die Ausrichtung der Lanzen 22 weicht von der Senkrechten auf die Brennkammerwand um einen Winkel von 10° bis 30° ab. Vorzugsweise ist dieser Winkel doppelt so groß wie der entsprechende Neigungswinkel der Gasbrenner 6. In der Draufsicht sind die Lanzen 22 vorzugsweise in den Zwischenräumen zwischen den Gasbrennern 6 angeordnet, wobei sich Gasbrenner 6 und Lanzen 22 aber nicht in einer Ebene befinden.

Über die Lanzen 22 kann reiner Sauerstoff mit einer Geschwindigkeit von 100 m/s bis 200 m/s in die Brennkammer 22 eingedüst werden. Durch den schrägen Einbau der Lanzen 22 und die hohe Strömungsgeschwindigkeit des Sauerstoffs wird eine Rotation der Atmosphäre in der Brennkammer 2 hervorgerufen, die zu einer Vergleichmäßigung des Wärmeeintrags führt.

Das Brenngas, beispielsweise Erdgas, wird vorzugsweise stufenweise verbrannt. Über die Gasbrenner 6 werden Brenngas und mit Sauerstoff angereicherte Luft unterstöchiometrisch zugeführt und miteinander zur Reaktion gebracht. Das entstehende Gasgemisch wird dann mit dem über die Lanzen 22 eingedüsten Sauerstoff nachverbrannt. Auf diese Weise erhält man eine Flamme mit großer räumlicher Ausdehnung und relativ niedriger Temperatur, so dass die NOX-Emissionen minimiert werden.

Im Abluftkanal 14 ist ein Thermoelement 21 zur Temperaturmessung vorgesehen. Die Abgastemperatur sollte idealerweise in einem Temperaturbereich zwischen 100 °C und 140 °C gehalten werden. Um dies zu erreichen, werden die Brenngas- und Sauerstoff- bzw. Luftzufuhr zu den Gasbrennern 6 und die Sauerstoffzufuhr zu den Lanzen 22 in Abhängigkeit von der Abgastemperatur geregelt. Durch Variation der Brenngas- bzw. Luft- und/oder Sauerstoffzufuhr kann sowohl die dem Kupolofen insgesamt zugeführte Wärmeleistung als auch der Hauptwärmeübertragungsmechanismus beeinflusst werden und zwar unabhängig voneinander. Durch Erhöhung der zugeführten Luftmenge und entsprechende Verringerung der über die Lanzen 22 zugeführten Sauerstoffmenge kann beispielsweise bei gleichbleibender Wärmeleistung der Wärmeübergang durch Konvektion erhöht und der durch Strahlung erniedrigt werden. Es ist zudem möglich, weitere Parameter, wie z.B. die Abgaszusammensetzung, die Flammenintensität, deren Größe, die Temperatur des zu schmelzenden Materials oder der Schmelze, usw., zur Steuerung des Schmelzprozesses im Kupolofen zu nutzen.

## Patentansprüche

1. Verfahren zur Herstellung von Mineralwolle, wobei ein mineralisches Ausgangsmaterial in einem Kupolofen geschmolzen wird, wobei der Kupolofen einen Schacht (11) zur Aufnahme des Ausgangsmaterials aufweist und der Schacht (11) in seinem unteren Teil mit einem Rost (7) versehen ist und wobei sich unterhalb des Rostes (7) eine Brennkammer (2) befindet, die mit einem Auslass zur Entnahme geschmolzenen Ausgangsmaterials versehen ist, wobei die Brennkammer (2) mit einem oder mehreren Brennern (6) beheizt wird, wobei der oder die Brenner (6) mit einem flüssigen oder gasförmigen Brennstoff versorgt werden und der Brennstoff mit einem sauerstoffhaltigen Gas umgesetzt wird, **dadurch gekennzeichnet, dass** die Menge und der Sauerstoffgehalt des sauerstoffhaltigen Gases in Abhängigkeit von mindestens einem den Schmelzprozess charakterisierenden Parameter, insbesondere der Abgastemperatur, Abgaszusammensetzung, Temperatur des zu schmelzenden und/oder des geschmolzenen Ausgangsmaterials oder der Flammenintensität, geregelt werden.

2. Verfahren nach Anspruch 1, **dadurch gekennzeichnet, dass** in der Aufheizphase, in der noch kein geschmolzenes Ausgangsmaterial über den Auslass entnommen werden kann, dem Kupolofen ein sauerstoffhaltiges Gas zugeführt wird, welches einen geringeren Sauerstoffanteil aufweist als das sauerstoffhaltige Gas, welches dem Kupolofen in der Schmelzphase zugeführt wird, in der geschmolzenes Ausgangsmaterial über den Auslass entnommen werden kann.

3. Verfahren nach einem der Ansprüche 1 oder 2, **dadurch gekennzeichnet, dass** in der Aufheizphase dem oder den Brennern (6) ein sauerstoffhaltiges Gas zugeführt wird, welches einen geringeren Sauerstoffanteil aufweist als das sauerstoffhaltige Gas, welches dem oder den Brennern (6) in der Schmelzphase zugeführt wird.

4. Verfahren nach einem der Ansprüche 2 oder 3, **dadurch gekennzeichnet, dass** die Brenner (6) in der Aufheizphase mit einem sauerstoffhaltigen Gas betrieben werden, welches einen Sauerstoffanteil von weniger als 30 %, vorzugsweise zwischen 21 % und 30%, aufweist, und dass die Brenner (6) in der Schmelzphase mit einem sauerstoffhaltigen Gas betrieben werden, welches einen Sauerstoffanteil von mehr als 30 % aufweist.

5. Verfahren nach einem Ansprüche 1 bis 4, **dadurch gekennzeichnet, dass** die Brenner (6) so betrieben werden, dass die Länge der bei der Verbrennung des Brennstoffes mit dem sauerstoffhaltigen Gas entstehenden Flammen zwischen 60 % und 100 %, bevorzugt zwischen 65 % und 95 %, des Durchmessers der Brennkammer (2) beträgt.

6. Verfahren nach einem der Ansprüche 1 bis 5, **dadurch gekennzeichnet, dass** der Kupolofen mit einem Koksanteil an dem dem Kupolofen zugeführten Brennstoff von weniger als 20% betrieben wird, besonders bevorzugt dass der Kupolofen kokslos betrieben wird.

7. Verfahren nach einem der Ansprüche 1 bis 6, **dadurch gekennzeichnet, dass** Öl oder Erdgas als Brennstoff eingesetzt werden.

8. Verfahren nach einem der Ansprüche 1 bis 7, **dadurch gekennzeichnet, dass** die Brennkammer (2) mit zwei bis acht, vorzugsweise mit drei bis fünf Brennern (6) beheizt wird, welche in der oder den Seitenwänden der Brennkammer (6) angeordnet sind oder diese durchstoßen.

9. Verfahren nach einem der Ansprüche 1 bis 8, **dadurch gekennzeichnet, dass** die Flamme(n) des oder der Brenner um einen Winkel zwischen 5° und 15°, vorzugsweise zwischen 8° und 12°, gegen die Waagrechte geneigt sind.

10. Verfahren nach einem der Ansprüche 1 bis 9, **dadurch gekennzeichnet, dass** die Projektionen der Zentralachse des Brenners (6) und des durch die Austrittsöffnung des Brenners (6) verlaufenden Durchmessers der Brennkammer (2) in eine waagrechte Ebene einen Winkel zwischen 3° und 20°, vorzugsweise zwischen 5° und 15°, bilden.

11. Verfahren nach einem der Ansprüche 1 bis 10, **dadurch gekennzeichnet, dass** die Brennkammer (2) mit einer oder mehreren Lanzen (22) versehen ist, dass die Brenner (6) unterstöchiometrisch betrieben werden und dass der Brennkammer (2) über die Lanzen (22) ein sauerstoffhaltiges Gas, vorzugsweise sauerstoffangereicherte Luft oder technisch reiner Sauerstoff, zugeführt wird.

12. Verfahren nach einem der Ansprüche 1 bis 11, **dadurch gekennzeichnet, dass** der Brennkammer (2) über die Lanzen (22) weniger als 30%, vorzugsweise zwischen 5% und 20%, der gesamten dem Kupolofen zugeführten Menge an sauerstoffhaltigem Gas zugeführt wird.

13. Verfahren nach einem der Ansprüche 11 oder 12, **dadurch gekennzeichnet, dass** die Projektionen der Zentralachse der Lanze(n) (22) und des durch die Austrittsöffnung der Lanze(n) (22) verlaufenden Durchmessers der Brennkammer (2) in eine waagrechte Ebene einen Winkel zwischen 10° und 30°, vorzugsweise zwischen 16° und 24°, bilden.

14. Verfahren nach einem der Ansprüche 11 bis 13, **dadurch gekennzeichnet, dass** das sauerstoffhaltige Gas mit einer Geschwindigkeit zwischen 100 m/s und 200 m/s aus der oder den Lanzen (22) ausströmt.

15. Verfahren nach einem der Ansprüche 1 bis 14, **dadurch gekennzeichnet, dass** die Temperatur des den Kupolofen verlassenden Abgases gemessen wird und Menge und Sauerstoffgehalt des sauerstoffhaltigen Gases so eingestellt werden, dass sich eine Abgastemperatur zwischen 80°C und 250°C, vorzugsweise zwischen 100 °C und 140 °C einstellt.
